# EUROPEAN PATENT SPECIFICATION

(11) **EP 0 402 012 B1**
(45) Date of publication and mention of the grant of the patent: **14.08.1996**
(21) Application number: 90305681.0
(22) Date of filing: 24.05.1990
(51) Int. Cl.: G01N 23/083, G01N 23/04, G01N 23/06

(54) **Non-destructive examination of contents of containers**
Zerstörungsfreie Prüfung des Inhaltes von Behältern
Essai non destructif du contenu de conteneurs

(30) Priority: 24.05.1989 JP 130380/89
(43) Date of publication of application: 12.12.1990
(73) Proprietor: MEIJI MILK PRODUCTS COMPANY LIMITED, Tokyo 104 (JP); FUJIMORI KOGYO CO., LTD., Tokyo 103 (JP)
(72) Inventor: Kakimoto, Kenichi c/o Meiji Milk Prod. Co., Ltd., Higashimurayama-shi Tokyo 189 (JP); Kobayashi, Toshitaka Meiji Milk Prod. Co., Ltd., Higashimurayama-shi Tokyo 189 (JP); Nagata, Masanori c/o Fujimori Kogyo Co., Ltd., Chuo-ku Tokyo 103 (JP); Imano, Shigeki c/o Fujimori Kogyo Co., Ltd., Chuo-ku Tokyo 103 (JP); Honma, Hideaki c/o Softex Co., Ltd., Tokyo 150 (JP); Nishiyama, Hideki c/o Softex Co., Ltd., Tokyo 150 (JP)
(74) Representative: Godwin, Edgar James

(56) References cited:
- DE-A- 3 520 600
- GB-A- 2 113 828
- US-A- 4 791 655

## Description

The present invention relates to a method of and an apparatus for examining materials, such as liquids, pastes and others having fluidity,that are contained in bottles and like containers to form a package, in order to determine whether the package is defective because of an abnormality or alteration in the fluid content without destroying the packages.

More specifically, the present invention provides means whereby a package is shaken under a particular vibration condition, the package is then exposed to irradiation by ultra-soft X-ray radiation either while it is being shaken or immediately after the shaking is stopped and it ceases to agitate, the strength of the X-ray radiation that has been transmitted through the package is detected, so that it is thereby possible to detect a change and/or the magnitude of such change in the density per unit volume of a mixture consisting of the gas in any space other than occupied by the fluid content (which space will hereinafter be referred to as "head space") and the fluid content itself. Through those steps, it may be determined whether the fluid content contains any abnormal property alteration, and if it does, how much the fluid content is affected by such alterations.

### Description of the Prior Art

During the product quality control process, it is important that the finished products, particularly foods, in packages should be checked to see whether there are any abnormal alterations in the material property. For canned foods, a conventional testing method is provided whereby those contents are examined by striking from the outside to determine whether there are any unusual or abnormal material property alterations. For other articles, a conventional non-destructive testing method detects any difference between the normal (unaltered) and abnormal (altered) material conditions visually, or by using an image resolution or analysis technique, from the surface of the liquid that is fluctuating when the package is shaken under vibration. A typical conventional non-destructive testing method and apparatus are disclosed in Japanese Patent applications unexamined publication Nos. 63-167249 and 63-271146, respectively, and in the corresponding U.S. patent No. 4 791 655, whereby a package to be examined which contains a liquid, for example, is shaken to cause an agitated condition, and then the package is conveyed to a location where it is exposed to irradiation by ultra-soft X-ray radiation which is directed against it, from which appropriate video signal information is obtained. This video signal information reflects the distribution state of the head space, from which any abnormal alterations and/or magnitude thereof may be determined. The method and apparatus as mentioned above may not be applied in some cases, and in those cases, an appropriate number of packages must be sampled. Then, those samples must be opened to allow them to be checked to see whether there are any abnormal material property alterations.

The above conventional non-destructive method, which has primarily been used to examine the contents by striking from the outside, can only be applied to the canned articles. Similarly. the method, as also mentioned above, which consists of shaking a package under a concussion condition and then determining any abnormal alterations from the way in which the liquid surface is fluctuating, may only be applied for those types of packages through which the contents can be seen. Generally, most of the packages are not transparent, and so this method may have limited applications.

For the method and apparatus as disclosed in the patent applications unexamined publication Nos. 63-167249 and 63-271146 cited above, a video signal may be formed from the amount of X-ray beams that have been transmitted through the package. When this video signal is converted into a fluorescent image which may appear on the screen, it will remain as its afterimage on the screen for a certain length of time. If individual tests occur consecutively, every test must wait until the image during the preceding test has disappeared from the screen. If a negative film image is formed from the video signal, the time required to develop it into a positive film will be added. For those reasons, those method and apparatus have the limited testing capability.

All of the methods and apparatuses that have been described so far involve a human operator's intervention, such as visual checking. This imposes restrictions on the efficiency and precision that may be provided by them. Also, those methods and apparatuses cannot be employed on an automatic-flow line. In those respects, they have serious problems and drawbacks.

An object of the present invention is to provide a testing method that is specifically designed to examine the fluid content of a package in a non-destructive manner and without human intervention.

The present invention provides a non-destructive testing method, as defined in claim 1.

The invention also provides non-destructive testing apparatus as defined in claim 4.

The "abnormality" or "alteration" detected may include any unacceptable material alterations or defects in the density, viscosity, and composition, as well as any unacceptable bacterial alterations in foods, medicines, and the like.

The fluid content of the packages may include liquids, pastes, and the like, and the gaseous substance that also occupies the packages may be air or any inert gas, such as nitrogen gas.

The X-ray detecting means may include an X-ray beam meter which provides an analog signal to be supplied to any appropriate signal processing circuit, combined with any data logger that determines and records the appropriate data which shows whether there are abnormalities or alterations.

As it may be appreciated from the foregoing description, the method and apparatus according to the present invention provide improvements over the prior art method and apparatus that have the technical problems such as those mentioned earlier. It may also be understood that the present invention may be employed in an automatic flow-line manufacturing environment.

As one feature of the present invention, a package containing fluid substance is shaken. Shaking the package causes agitation which will cause the fluid content and any gas in the head space above it to be mixed together. As the package begins to be agitated, that part of the gas in the head space located nearest to the surface of the fluid content will first change into fine air bubbles which enter the fluid content, followed by the remaining parts located farther away from the surface that also change into fine bubbles, entering the fluid content. Thus, those gas bubbles and the fluid content are mixed together. The package continues to be shaken until the package and its content reach a natural resonance frequency, when the bubbles have entered into the entire fluid content and the resulting mixture has become uniform. When the uniform mixture has thus been obtained, the content has its smalles density at the middle of the package. If the vibrating energy, which is now applied to the package, is further increased after the package has reached a natural resonance frequency, the resonant vibration of the package will be stopped, and the rate at which the bubbles and fluid content are mixed together at the middle of the package will be reduced.

It is noted that the strength of the X-ray beams that pass through a medium decreases with increasing density of the medium. Any change in the strength may be detected by an appropriate X-ray beam detector or meter, and may provide the basis for determining the corresponding substance property alteration that may occur with the content inside the package with regard to any particular reference data previously obtained. As the ratio of the fluid content and gas bubbles increases, the density decreases accordingly, which allows a greater proportion of X-ray radiation to be transmitted through the package.

It is known in the vibration dynamics field that the vibration conditions under which two different objects, such as a container and its content in this case, provide the greatest resonance may depend upon some physical variables such as the quantity, density, and viscosity of the content, and the property of the material for the package, and may be expressed in terms of certain value ranges of those variables. It is also known in this field that the resonance will occur under the certain vibrating condition as long as those variables have a constant value. It should be noted, however, that when two different substances. such as liquid detergent and salt solution, have the identical viscosity and density but may have different properties, the fine air bubbles that are produced from the head space when the package is vibrating, and enter into the content may occur in quite a different manner. When any particular object to be examined is foods, the manner in which air bubbles would be produced if any change in the chemical property would be caused by the protein decomposition may differ from that in the normal situation, even though there is no change in the viscosity when the protein decomposition occurs. Furthermore, when the vibrating condition under which the object under examination containing any affected substance provides the greatest resonance, and the vibrating condition under which the object under examination containing no affected substances provides the greatest resonance are close (such as the foods that contain the particular bacteria that have grown, and the foods that don't), the rates at which the produced air bubbles are disappearing are different. For those reasons, the method according to the present invention allows the object containing the affected substances to be detected.

When a package that contains a particular fluid article is to be examined according to the present invention, the package is shaken by any mechanical means or manually, with the thickness across its central portion maintained constant to be illuminated with an irradiation of ultra-soft X-ray beams, and a chaotic motion is thus caused over the surface of the content within the package. As the applied vibration energy is increasing, the head space within the package is diffused into the content. As the resonant effect appears between the package and its content, the head space that has been diffused into the content is changed to fine air bubbles, which are uniformly mixed with the content at the maximum resonant point. The package is thus filled with the resultant uniform mixture. Either in this state or immediately after the package ceases to vibrate, an irradiation of ultra-soft X-ray beams is illuminated against the surface of the package. When the package is exposed to this radiation. the central portion of the package in which the uniform mixture of the fine air bubbles and content is formed will have the lowest density, and the largest amount of X-ray beams will be transmitted through that portion. The vibrating condition in which the maximum resonance effect appears, and the length of the time required from the beginning of the concussion by shaking operation until the time when the maximum resonance is reached, or the length of the time required from the end of the resonance until the produced air bubbles disappear may vary in response with any change in the property of the content. if the types or forms and volume of packages and the quantity of contents contained in packages are identical. It may be understood from the above fact that, when a package containing an article whose property is affected by any alteration is shaken under the same vibrating condition as the one under which a package containing an article whose property is not affected by any alteration is shaken in order to provide the maximum amount of the transmitted X-ray beams, the amount of the transmitted X-ray beams will be lower than the package with the non-altered content. This difference between those amounts of the transmitted X-ray beams will help determine whether there are any property alterations or not and/or the magnitude or degree of such alterations. When the vibrating conditions under which those two packages are shaken to provide the maximum resonance, and the lengths of the time required from the beginning of the shaking operation until the maximum resonance is reached for those two packages are very close, respectively, there will be a difference between the rates at which the produced air bubbles for those two packages are disappearing. In this case, any property alteration may be detected from the difference between the amounts of the transmitted X-ray beams for the two packages.

The packages which will be used for containing articles may be made of a metal foil, a combination of metal foil and any plastics and/or laminated sheet paper, a single-layer or multiple-layer plastics, metal evaporated film, paper, laminated paper and plastics, and a resin-coated cloth. Packaging materials that are used to supplement those packages may include carton and kraft paper, as well as the materials listed above.

The packages may have any types or forms, including a bottle, container, bagging box, flat bag, self-standing bag, tube, carton, composite can, paper can, aluminum can, and the like.

The articles which are contained in those packages may include foods, medicines, animals' feeds, reagents, and the like. In particular, the foods and medicines might affect the human life if they should be altered, so they should require the most careful examination. The articles may have any form, such as uniform liquids, non-uniform liquids, pastes, and any other fluid forms.

The ultra-soft X-ray beams refer to the X-ray beams in the wave-length range spectrum located near to the ultraviolet rays, and this term may be used to be distinguished from the normal X-ray beams in the wave-length range located near to the γ-ray beams.

The X-ray beams meter means includes slits through which those beams transmitted through the article or content in the package are passed, and a fluorescent light emitter which converts the transmitted X-ray beams to the corresponding amount of light. The light is fed to a photomultipier which converts the input light to a flow of electrons. This flow of electrons is applied to an electron amplifier which provides current output after amplification. The X-ray beams meter means may be any type that can convert the X-ray beams into the corresponding analog electrical signal, such as a scintillation counter. The electrical signal is further applied to a signal processing circuit which provides the amplifier and comparator functions to allow the input electrical signal to be amplified and compared against the particular reference value.

The package may be subject to any deformation when it is being shaken and concussed, causing variations in the thickness across the area through which the X-ray beams are to be transmitted. If this occurrs, the detector will be operated improperly. In order to avoid this situation, the shaker includes a package retainer specifically designed to conform with the material strength of the package, thereby preventing the package to have any deformations under the applied shaking force.

The method and apparatus of the present invention that have been described so far allow the contents within all packages to be checked to see whether the contents contain any property alterations or defects, without the need of destroying the packages. Thus, none of the packages will be wasted during the examination. In addition to the above, the magnitude or degree of any alterations that may have been found can also be determined. The examination involves no visual checking, which allows the total number of the packages that have passed through the examination to be counted. The method and apparatus according to the present invention provides advantages when they are applied in the relevant industry, particularly in the foods processing and medicine manufacturing fields.

In particular, the apparatus according to the present invention may form part of the automatic production flow line, and may also be coordinated with any other production lines. Thus, the high working efficiency, high precision requirements and full-automatic producing can advantageously be satisfied.

Those and other objects, advantages, and features of the present invention will become more apparent from the detailed description of several preferred embodiments that will follow by referring to the accompanying drawings, in which:
Fig. 1 is a front elevation view illustrating apparatus embodying the present invention in a partly cross-section;
Fig. 2 is a plan view illustrating the same apparatus as shown in Fig. 1 in a partly cross-section;
Fig. 3 is a schematic diagram of an example of a shaker which may be included in the preferred embodiment of the apparatus according to the present invention. in which some essential parts of the shaker are shown;
Fig. 4 is a block diagram showing a detector that may be included in the preferred embodiment of the apparatus according to the present invention;
Fig. 5 is a front elevation view showing part of a separator in its specific embodiment; and
Fig. 6 is a plan view showing the same part of the separator as shown in Fig. 5.

### DESCRIPTION OF PREFERRED EMBODIMENTS

### EXAMPLE 1

In this example, a package is formed by a polyethylene bottle having a 55 mm diameter, 165 mm height, and 0.7 mm thickness, and processed milk is hermetically filled in the bottle. Three kinds of processed milk were used, and each of them was contained in the respective bottle. One bottle contains the milk that has just been processed and has no further processing (which will hereinafter be referred to as "unaltered milk"). Another bottle contains processed milk which contains any arbitrary kind of strain which has been added thereto and has been left to grow for four or five days at room temperatures (which will hereinafter be referred to as "pre-stage altered milk"). The third bottle contains any arbitrary kind of strain which has been added thereto and has been left to grow for two weeks at room temperatures (which will hereinafter be referred to as "post-stage altered milk"). The Model SV-100A (which provides the maximum power output of 100 KVP at 5mA), which is available from SOFTEX CO., LTD. Japan, may be used as the ultra-soft X-ray beam supply source, and was used in this example.

The testing proceeds as follows:

Each bottle which contains the respective processed milk is first shaken by the shaker. The shaking continues under the concussion condition in which the bottle containing the unaltered milk and its content provide the maximum resonance. At this maximum resonant point, those three bottles are exposed to an irradiation of ultra-soft X-ray beams that are supplied at the output power of 55 KVP, at 3 mA. The amount of X-ray beams that have been transmitted through the middle portion of each respective bottle is detected by using the X-ray beam meter, named R-1005, which is also available from the abovementioned company. The output of the trans mitted X-ray beams as detected by the detector is substantially equal to 270 mV for the unaltered milk, whereas it is as low as 160 mV at the maximum for both the pre-stage altered milk and post-stage altered milk under the same concussion condition. It should be noted that the unaltered milk has the viscosity of 1.84 CP at 20 °C, and the altered milk has the viscosity of 1.50 to 247.50 CP at 20 °C. It has been found that the method according to the present invention may be used to distinguish the altered milk from the unaltered one although some altered milk has the same viscosity as that of unaltered milk. The testing occurred under the same conditions as descirbed above for each of those bottles that are covered with an aluminum-laminated film having different thicknesses such as 7 µm, 15 µm, and 20 µm or a double-flute carton or both. The same results were obtained for those bottles.

### EXAMPLE 2

In this example, the examination was conducted in the same manner as in the preceding example, for the bottles which contained the unaltered processed milk and for the bottles which contained the altered processed milk to which any arbitrary strain was added and which had been stored for six weeks in the refrigerator at 10°C.

The results obtained during the examination show that the X-ray beams detector provided the output of 250 mV on average for all of the unaltered milk bottles whereas it provided the output of below 170 mV for most of the altered milk bottles. Some of the altered milk bottles examined had the viscosity of 1.75CP, for which the detector provided the output of 240 mV on average, and the length of the time required from the beginning of the vibration until the maximum resonance was reached was close to that for the unaltered milk bottles. 0.8 seconds after the vibration was ceased, the output of the detector was equal to 0 mV for the unaltered milk bottles (which corresponds to the value of the output detected when the bottles were not vibrating), whereas the output of the detector was equal to as high as 200 mV on average for the altered milk bottles. Thus, it has been found that when the altered milk bottles cannot be identified at the resonant point, it is possible to identify them by illuminating the ultra-soft X-ray beams against them, immediately after they cease to vibrate.

### EXAMPLE 3

A paper pack has the bottom of 95 mm x 63 mm, and the height of 175 mm, and 1,000 m ℓ of ordinary milk which was previously sterilized was hermetically placed in the paper pack. Each paper pack contains the unaltered milk, pre-stage altered milk, and post-stage altered milk, respectively, all of which were previously processed and prepared as described in the EXAMPLE 1. The examination was also conducted in the same manner as described in the EXAMPLE 1, by using the SOFTEX's ultra-soft X-ray beams illuminator (Model SV100A, maximum power output of 100 KVP, 5 mA) and the X-ray beams meter (Model R-1005). Each of the paper packs used for the examination has the five-layer structure consisting of the upper 15µm thick polyethylene film layer, the 260µm thick duplex paper layer, 25 µm thick polyethylene film layer and 7 µm thick aluminum foil layer forming the intermediate layers, and the lower 45 µm thick polyethylene film layer.

The results obtained show that the detector provided the output of 300 mV for the unaltered milk packs, whereas it provided the maximum output of as low as 180 mV for the pre-stage and post-stage altered milk packs. Those packs could be identified. The altered milks had the viscosity of 1.68 CP at 20 °C while the unaltered milks had the viscosity of between 1.45 CP and 55.50 CP. Some of the altered milks had the viscosity almost equal to that of the respective unaltered milks, and they could be identified. Another testing occurred for those packs which were supplemented by the double-flute carton, and the same results were obtained.

### EXAMPLE 4

The testing was conducted for those aluminum cans containing foods for weaning children as reference (whose viscosity is 2.5 CP at 20 °C) and those aluminum cans containing similar foods whose density would tend to be altered (such as to be watery) at the beginning of the manufacturing process. Both of the those aluminum cans were examined in the consecutive manner by using the apparatus of the present invention. The examination occurred by exposing them to the irradiation of the ultra-soft X-ray beams and detecting any alterations under the same conditions as described in EXAMPLE 1. The shaking conditions were chosen such that those aluminum cans containing the reference foods would provide the maximum resonance. Through the examining steps, those aluminum cans which contained the altered or watered foods having the density less than to 1.8 CP at 20 °C could be identified.

### EXAMPLE 5

The testing was conducted for packing bags which have the four-layer structure consisting of the outer 12µm thick polyester film, the intermediate 9 µm thick aluminum foil and 15µm thick two-axial rolled nylon film, and the inner 70µm-thick polyethylene film. Those packing bags contained 200 mℓ of potage soup. Some of those packing bags contained the potage soup that was just processed ("unaltered potage"), others contained the potage soup that was processed and then had been left for four or five days at the room temperatures ("pre-stage altered potage"), and the others contained the potage soup that was processed and then had been left for two weeks at the room temperatures ("post-stage altered potage"). The examination was conducted by using the same hardware as for EXAMPLE 1 in the same manner, except for the detector type that provides the power output of 40 KVP at 3 mA. The results show that the output from the detector for the pre-stage and post-stage altered potage bags was low, as compared with the output for the unaltered potage bags. The smallest output difference was equal to 50 mV, which could be identified.

### EXAMPLE 6

The testing occurred in the same manner as for EXAMPLE 1 for 2 mℓ plastics cups containing 1mℓ of cream, except for the detector that provided the power output of the ultra-soft X-ray beams equal to 10 KVP at 2 mA. The results show that the output from the detector for the pre-stage and post-stage altered cream cups was low, as compared with the output for the unaltered cream cups. The smallest output difference was equal to 20 mV, which could be identified.

### EXAMPLE 7

The testing occurred in the same manner as for EXAMPLE 1 for those polyester bottles having the bottom of 70 mm x 40 mm, the height of 150 mm and the thickness of 0.5 mm and which contained 250 mℓ of India (or China) ink hermetically, and for those similar bottles that initially contained 250 mℓ of India ink not hermetically which had been left for twenty days in the 30 °C temperature-controlled room and then had been kept hermetic. The first-mentioned bottles contained the unaltered ink as the reference, and the second-mentioned bottles contained the altered ink. The shaking condition was chosen such that the unaltered ink bottles and their contents would provide the maximum resonance effect. The detector has the power output of 50 KVP at 3 mA.

For the unaltered ink bottles, the maximum resonance point was reached 2.25 seconds after they began to vibrate under the applied shaking motion and the output of the X-ray beams meter increased at about 50 mV, whereas for the altered ink bottles, no resonance effect was presented 2.25 seconds later, for which the output of the X-ray beams meter remained unchanged, as compared with the one provided prior to the shaking motion. The resonance effect appeared 11.20 seconds later.

The detector in EXAMPLE 2 was used with those bottles in this example. The testing occurred again under the above shaking conditions, and the output provided by the detector 5 seconds after the shaking motion began helped identify the unaltered ink bottles and the altered ink bottles.

### EXAMPLE 8

The vinyl chloride containers which held 20 cc of liquid retoucher were examined in the same manner as for EXAMPLE 6. to verify the quality of their contents. The shaking condition was chosen such that the unaltered contents and their containers would provide the maximum resonance, and the altered (hardened) contents and their containers provided no resonance effect when the containers were shaken under the chosen shaking conditions. The output of the detector remained unchanged, as compared with the one provided prior to the shaking motion. Thus, those containers with the defective retouchers could be identified.

### EXAMPLE 9

Here, an example of the apparatus embodying the present invention is described by referring to the drawings.

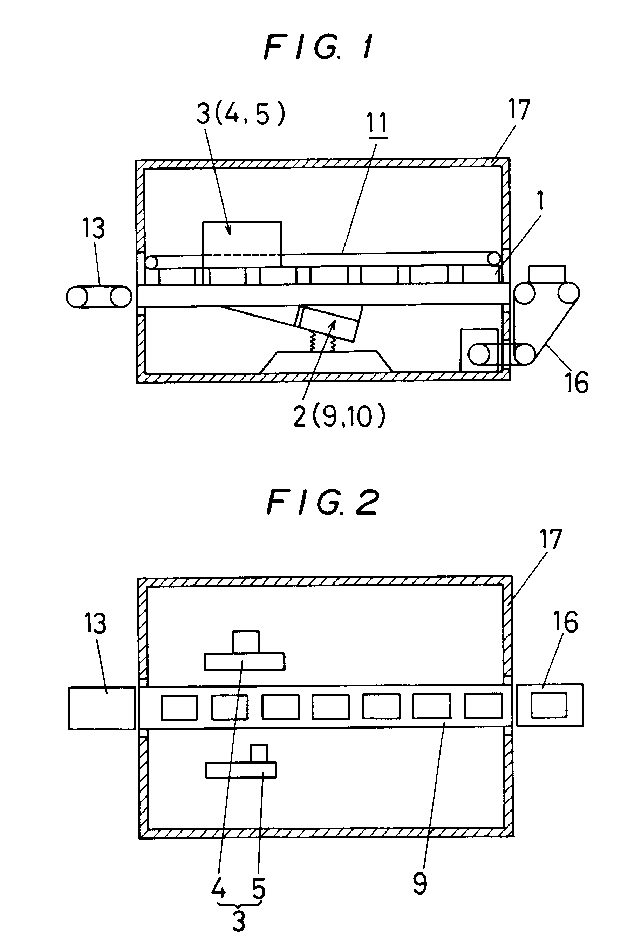

Referring now to Figs. 1 and 2, the apparatus according to the present invention includes shaker means 2 for causing a package 1 to vibrate and main detector means 3 which is disposed separately from and in parallel with the shaker means 2. It should readily be understood that the main detector means 3 is provided physically and mechanically separate from the shaker means, rather than integrally with the latter, because the vibrations produced by the shaker means 2 would otherwise be imparted to the main detector means 3, which would cause the ultra-soft X-ray beams emitter 4 to provide the X-ray beams out of focus. This would cause the X-ray beam detector or sensor 5 to respond to those out-of-focus X-ray beams that have been transmitted through the package and provide the corresponding variant output signals. The arrangement shown can meet the requirements for isolating the main director means 3 from the vibrations caused by the shaker means 2.

The shaking means 2 includes a conveyor 9, a vibration generator 10, and other elements or parts operatively associated with the conveyor and vibration generator. The conveyor 9 carries a package 1 thereon toward the downstream side thereof. The vibration generator 10 produces vibrations which are transmitted to the package 1 travelling with the conveyor 9. This vibration generator 10 may have the form of an electric motor vibrator, an electromagnetic vibrator that provides the attractive force, a vibration motor, a mechanical vibrator, or any other known type of vibration generating device. A package retainer 11 is provided for holding the package 1 travelling on the conveyor 9 so that the package 1 will maintain its constant thickness which would be affected by any deformation that would otherwise occur. This package retainer 11 is disposed above (and on the opposite sides of) the conveyor 9 and in paralel with it. A spring-loaded bar 12 is included to permit the package retainer 11 to be brought closer to or away from the conveyor 9 and to permit it to follow the conveyor 9 that is travelling, when it engages the package 1. The package retainer 11 is allowed to synchronize with the shaker means, thereby providing the smooth shaking motion.

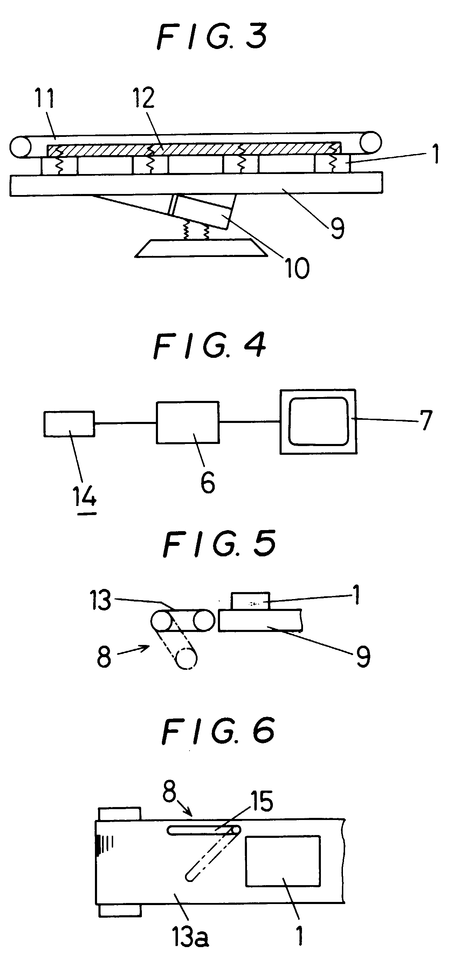

The main detector means 3 includes an ultra-soft X-ray emitter 4 and an X-ray detector 5. The ulra-soft X-ray emitter 4 directs its ultra-soft X-ray beams against the package 1. The X-ray detector 5 includes an X-ray beam sensor 14, a signal processing circuit 6, and a data logger 7, as shown in Figure 4. The X-ray beam sensor 14 responds to any X-ray beams that have been transmitted through the package 1, and converts those X-ray beams toa fluorescent light. This light is fed to a photomultiplier which provides an electron flow, which is applied to a preamplifier that provides current output after amplification. The output signal of the X-ray beam sensor 14 is a unique signal that corresponds to each individual package 1 and which is applied to the signal processing circuit 6 which determines from the unique signal whether the appropriate package contains any abnormal alterations and/or the magnitude or degree of such alterations. This information from the signal processing circuit 6 is recorded in the data logger 7 from which it may be displayed.

Preferably, the apparatus according to the present invention may further include means for separating those packages that have been identified as defective from those packages that have been identified as non-defective. This separator means 8 may be provided at the end of the main detect.or means 3. The example of the separator means 8 is shown in Fig. 5.

As seen from Fig. 5, a second conveyer 13 may be connected at the end of the main detector means 3, and may have its one end pivotally supported so that its other (free) end can swing up and down. The second conveyer 13 may be operated when a package that has been identified as defective is moving onto the second conveyer 13, and may swing downwardly to allow that package to be separated from the non-defective package.

An alternative form of the separator means 8 is shown in Fig. 6. As seen from Fig. 6, a guide rail 15 may be provided at the end of the main detector means 3 or on a second conveyer 13a contiguous with the main detector means 3, and may be controlled so that it can turn in one or the other direction, depending upon whether a package has been identified as defective or not. Thus, the guide rail 15 can guide the packages in the different directions, according to the packages identified as defective or not. In Figs. 1 and 2, a package delivery conveyor 16 and an X-ray shield 17 are also shown.

As described so far, each individual package, bottle, can, or the like that contains an object to be examined, such as foods, is checked to see whether the object contains any alteration, and the separator means 8 allows those individual packages to separate between those identified as defective and those identified as non-defective.

The ultra-soft X-ray beam supply source and its X-ray beam detector may be of any known type, and each individual package may be started or stopped at any time.

## Claims

1. A non-destructive testing method for packages comprising a container and a fluid content, the method comprising:
shaking a normal package, in which the fluid content is in its normal or unaltered state, under a vibrating condition which causes the normal fluid content and any gaseous substance also contained in the container to mix together ;
allowing the package to vibrate under the said vibrating condition until a sufficient time has elapsed for the resulting mixture to become uniform;
exposing the package to irradiation by ultra-soft X-ray radiation, after the said time, at which transmission of ultra-soft X-ray radiation by the normal package is maximal, has elapsed, either while it is vibrating or immediately after the vibrating is stopped;
detecting only the strength of ultra-soft X-ray radiation that has been transmitted through a single portion of the package, as a single reference value;
repeating the preceding steps for other similar packages, in which the state of the fluid content is unknown, using the same vibrating condition, thereby obtaining a single specific value of the transmitted X-ray strength for each of the said other packages;
comparing each specific value against the reference value and determining any difference between each specific value and the reference value; and
determining from the said difference whether there is any unacceptable abnormality or alteration in the state of the fluid content in each of the said other packages.

2. A method as claimed in claim 1, wherein the fluid content is a liquid or paste.

3. A method as claimed in claim 1 or 2, wherein the gaseous substance is air or an inert gas, e.g. nitrogen.

4. Non-destructive testing apparatus for testing packages comprising a container and a fluid content, the apparatus comprising:
means (9) for supporting a package (1) ;
means (10) for vibrating the supporting means (9), together with the package (1), so as to cause the fluid content and any gaseous substance also contained in the container to mix together;
means (11) for retaining the package (1) on the supporting means (9) and vibrating with the supporting means (9);
means (4) for directing ultra-soft X-ray radiation at the package (1) on the supporting means (9);
detector means (5), located opposite the X-ray radiation directing means (4), for detecting only the strength of X-ray radiation which has been transmitted through a single portion of the package, as a single specific value, comparing the specific value with a single reference value, and producing an output signal dependent on the comparison; and
package separator means (8) connected to the output of the detector means (5), for receiving packages from the supporting means (9) and separating those packages identified as defective and those packages identified as non-defective, according to the output signal from the detector means (5).

5. Non-destructive testing apparatus as claimed in claim 4, wherein the detector means (5) includes X-ray sensing means (14), signal processing means (6), and data logging means (7), the X-ray sensing means (14) providing an X-ray strength signal, as the said single specific value, the signal processing means (6) comparing the X-ray strength signal with the reference value and determining, whether the package being tested is defective, and the data logging means (7) recording and displaying this information.

6. Non-destructive testing apparatus as claimed in claim 4 or 5, wherein the package separator means (8) includes either means (13) for selectively guiding those packages identified as defective to an outlet or path switching means (15) for switching those packages identified as defective or those packages identified as non-defective to the appropriate path.

## Patentansprüche

1. Zerstörungsfreies Prüfverfahren für Packungen, die einen Behälter und einen fließfähigen Inhalt aufweisen, wobei das Verfahren aufweist:
Schütteln einer normalen Packung. in der sich der fließfähige Inhalt in seinem normalen oder unveränderten Zustand befindet, in einem Schwingungszustand, der bewirkt, daß sich der normale fließfähige Inhalt und jegliche gasförmige Substanz, die ebenfalls im Behälter enthalten ist, miteinander mischen:
Zulassen, daß die Packung im Schwingungszustand schwingt, bis eine ausreichende Zeit verstrichen ist, damit die resultierende Mischung gleichmäßig wird:
Bestrahlen der Packung mit einer ultraweichen Röntgenstrahlung, nachdem die Zeit, bei der der Durchlaß der ultraweichen Röntgenstrahlung durch die normale Packung maximal ist, verstrichen ist, entweder während sie schwingt oder unmittelbar nachdem die Schwingung beendet wurde;
Nachweisen nur der Intensität der ultraweichen Röntgenstrahlung, die durch einen einzigen Abschnitt der Packung durchgelassen wurde, als einziger Bezugswert;
Wiederholen der vorangegangenen Schritte für weitere gleiche Packungen, bei denen der Zustand des fließfähigen Inhaltes unbekannt ist, wobei der gleiche Schwingungszustand angewandt wird, wodurch ein einziger spezifischer Wert der durchgelassenen Intensität der Röntgenstrahlung für jede der weiteren Packungen erhalten wird;
Vergleichen eines jeden spezifischen Wertes mit dem Bezugswert und Ermitteln jeglicher Differenz zwischen jedem spezifischen Wert und dem Bezugswert; und
Ermitteln aus der Differenz, ob eine nicht zu akzeptierende Abnormalität oder Veränderung des Zustandes des fließfähigen Inhaltes in jeder der weiteren Packungen zu verzeichnen ist.

2. Verfahren nach Anspruch 1, bei dem der fließfähige Inhalt eine Flüssigkeit oder eine Paste ist.

3. Verfahren nach Anspruch 1 oder 2, bei dem die gasförmige Substanz Luft oder ein inertes Gas, beispielsweise Stickstoff, ist.

4. Vorrichtung für die zerstörungsfreie Prüfung für das Prüfen von Packungen, die einen Behälter und einen fließfähigen Inhalt aufweisen, wobei die Vorrichtung aufweist:
eine Trageeinrichtung (9) für die Packung (1):
eine Einrichtung (10) für das Bewirken des Schwingens der Trageeinrichtung (9) zusammen mit der Packung (1). so daß der fließfähige Inhalt und jegliche gasförmige Substanz, die ebenfalls im Behälter enthalten ist, miteinander gemischt werden:
eine Einrichtung (11) für das Festhalten der Packung (1) auf der Trageeinrichtung (9) und das Schwingen mit der Trageeinrichtung (9);
eine Einrichtung (4) für das Lenken der ultraweichen Röntgenstrahlung zur Packung (1) auf der Trageeinrichtung (9);
einen Detektor (5), der sich gegenüber der Einrichtung (4) für das Lenken der ultraweichen Röntgenstrahlung befindet. um nur die Intensität der Röntgenstrahlung, die durch einen einzigen Abschnitt der Packung durchgelassen wurde, als einen spezifischen Wert zu ermitteln, um den spezifischen Wert mit einem einzigen Bezugswert zu vergleichen, und um ein Ausgangssignal in Abhängigkeit vom Vergleich zu erzeugen; und
eine Sortiereinrichtung (8) für die Packungen, die mit dem Ausgang des Detektors (5) verbunden ist. um die Packungen von der Trageeinrichtung (9) aufzunehmen, und um jene Packungen. die als schadhaft ermittelt wurden, und jene Packungen. die als nicht schadhaft ermittelt wurden, entsprechend dem Ausgangssignal vom Detektor (5) zu sortieren.

5. Vorrichtung für die zerstörungsfreie Prüfung nach Anspruch 4. bei der der Detektor (5) umfaßt: eine Meßeinrichtung (14) für die Röntgenstrahlung: eine Einrichtung (6) für die Signalverarbeitung: und eine Einrichtung (7) für die Datenerfassung, wobei die Meßeinrichtung (14) für die Röntgenstrahlung ein Signal für die Intensität der Röntgenstrahlung als einzigen spezifischen Wert bereitstellt, und wobei die Einrichtung (6) für die Signalverarbeitung das Signal der Intensität der Röntgenstrahlung mit dem Bezugswert vergleicht und ermittelt, ob die geprüfte Packung schadhaft ist, und wobei die Einrichtung (7) für die Datenerfassung diese Information registriert und anzeigt.

6. Vorrichtung für die zerstörungsfreie Prüfung nach Anspruch 4 oder 5, bei der die Sortiereinrichtung (8) für die Packungen umfaßt: entweder eine Einrichtung (13) für das selektive Führen jener Packungen, die als schadhaft ermittelt wurden, zu einem Ausgang: oder eine Wegeschalteinrichtung (15), um jene Packungen, die als schadhaft ermittelt wurden, oder jene Packungen, die als nicht schadhaft ermittelt wurden, auf den geeigneten Weg zu bringen.

## Revendications

1. Procédé d'essai non destructif d'emballages comprenant un récipient et un contenu fluide. le procédé comprenant les étapes ci-dessous:
agitation d'un emballage normal, dans lequel le contenu fluide est dans son état normal ou non altéré, en présence de vibrations entraînant le mélange du contenu fluide normal et d'une quelconque substance gazeuse également contenue dans le récipient,
mise en vibration de l'emballage en présence desdites vibrations jusqu'à l'écoulement d'un laps de temps suffisant pour l'uniformisation du mélange résultant:
exposition de l'emballage à un faisceau de rayons X ultra-mous après l'écoulement dudit laps de temps. pendant lequel la transmission du faisceau de rayons X ultra-mous à l'emballage normal est maximale, ou bien pendant son exposition aux vibrations ou bien immédiatement après l'arrêt des vibrations;
détection de la seule intensité du faisceau de rayons X ultra-mous transmis à travers une seule partie de l'emballage, comme seule valeur de référence;
répétition des étapes précédentes pour d'autres emballages similaires, dans lesquels l'état du contenu fluide n'est pas connu, en appliquant les mêmes vibrations, pour obtenir ainsi une seule valeur spécifique de l'intensité des rayons X transmis pour chacun desdits autres emballages;
comparaison de chaque valeur spécifique avec la valeur de référence et détermination d'une quelconque différence entre chaque valeur spécifique et la valeur de référence; et
détermination sur la base de cette différence l'existence d'une quelconque anormalité inacceptable ou d'une altération de l'état du fluide contenu dans chacun desdits autres emballages.

2. Procédé selon la revendication 1, dans lequel le contenu fluide est un liquide ou une pâte.

3. Procédé selon les revendications 1 ou 2, dans lequel la substance gazeuse est de l'air ou un gaz inerte, par exemple de l'azote.

4. Dispositif d'essai non destructif pour le contrôle d'emballages comprenant un récipient et un contenu fluide, le dispositif comprenant:
un moyen (9) pour supporter un emballage (1);
un moyen (10) pour faire vibrer le moyen de support (9) ensemble avec l'emballage (1), de sorte à entraîner le mélange du contenu fluide et d'une quelconque substance gazeuse également contenue dans le récipient;
un moyen (11) pour retenir l'emballage (1) sur le moyen de support (9) et pour le faire vibrer avec le moyen de support (9);
un moyen (4) pour diriger un faisceau de rayons X ultra-mous sur l'emballage (1). agencé sur le moyen de support (9);
un moyen de détection (5) agencé en un point opposé au moyen de direction du faisceau de rayons X (4) pour détecter la seule intensité du faisceau de rayons X transmis à travers une seule partie de l'emballage, comme seule valeur spécifique, pour comparer la valeur spécifique avec une seule valeur de référence, et produire un signal de sortie dépendant de la comparaison; et
un moyen de séparation des emballages (8) connecté à la sortie du moyen de détection (5) pour recevoir les emballages du moyen de support (9) et séparer les emballages identifiés comme défectueux et les emballages identifiés comme non défectueux, en fonction du signal de sortie émis par le moyen de détection (5).

5. Dispositif d'essai non destructif selon la revendication 4, dans lequel le moyen de détection (5) englobe un moyen capteur des rayons X (14), un moyen de traitement des signaux (6) et un moyen d'enregistrement des données (7), le moyen capteur des rayons X (14) émettant un signal de l'intensité des rayons X, comme ladite seule valeur spécifique, le moyen de traitement des signaux (6) comparant le signal de l'intensité des rayons X avec la valeur de référence et déterminant si l'emballage contrôlé est défectueux, et le moyen d'enregistrement des données (7) enregistrant et affichant ces informations.

6. Dispositif d'essai non destructif selon les revendications 4 ou 5, dans lequel le moyen séparateur des emballages (8) englobe ou bien un moyen (13) pour guider sélectivement les emballages identifiés comme défectueux vers une sortie ou bien un moyen de commutation de voie (15) pour commuter les emballages identifiés comme défectueux ou les emballages identifiés comme non défectueux vers la voie appropriée.
